# EUROPEAN PATENT APPLICATION

(11) **EP 3 582 104 A1**
(43) Date of publication of application: **18.12.2019**
(21) Application number: 19161804.0
(22) Date of filing: 11.03.2019
(51) Int. Cl.: G06F 9/44, B61L 25/00

(54) **CONTROL MANAGEMENT DEVICE AND RIGHT INFORMATION MANAGEMENT SYSTEM**

(30) Priority: 11.06.2018 JP 2018110929
(71) Applicant: Hitachi, Ltd., Tokyo 100-8280 (JP)
(72) Inventor: KOBAYASHI, Yuichi, Chiyoda-ku, Tokyo 100-8280 (JP); OKAMURA, Norimasa, Chiyoda-ku, Tokyo 100-8280 (JP); KANEDA, Etsuo, Chiyoda-ku, Tokyo 100-8280 (JP); NAKAYAMA, Mizuki, Chiyoda-ku, Tokyo 100-8280 (JP); YANO, Hitomi, Chiyoda-ku, Tokyo 100-8280 (JP)
(74) Representative: Manitz Finsterwald Patent- und Rechtsanwaltspartnerschaft mbB

(57) **Abstract**

It is made possible to appropriately manage right usage information among a plurality of devices having control areas different from one another and reduce the management load of the right usage information.

An intermediate server 1000 that manages right usage information of a plurality of media in one of three or more control areas is configured to include right usage information 1001 including the right usage information of the plurality of media, a device request processor 1002 that updates the right usage information of any of the media based on a usage result of the medium in a control area, and a synchronization controller 1006 that transmits the right usage information of the medium updated by the device request processor 1002 in order from a control area at which arrival possible time of the medium is shorter from among the other control areas. In the right usage information 1001, right usage information of each medium is identifiable with medium identification information. The device request processor 1002 accepts the medium identification information of the medium of a usage target, specifies the right usage information on the basis of the medium identification information, and determines a usage result on the basis of the usage substance by the medium.

## Description

### FIELD OF THE INVENTION

The present invention relates to a control management device and so forth that manage information relating to right information associated with a transportable medium.

### BACKGROUND OF THE INVENTION

A traffic system or the like is known in which right information is stored in a medium such as, for example, an IC (Integrated Circuit) card and usage of traffic facilities is managed using the right information. In recent years, it is investigated to grasp a right usage situation on the real time basis or achieve facilitation of introduction of a new service by causing a host device side to have right information stored in an IC card.

For example, as a technology for managing information corresponding to a transportable medium or the like on the host device side, a technology disclosed in JP-2009-252075-A is known. According to the technology disclosed in JP-2009-252075-A, if a user accommodation device at each location accepts a usage request from a user of a terminal connected thereto, then the user accommodation device with which the user is currently associated is decided by referring to a retention user storage unit or a user retention location storage unit of a center server. From the user accommodation device, a user portal including a property for specifying a user accommodation device that holds a user copy of each application is called, and the user copy of an application designated by the user is called from the user accommodation device specified by the property. Then, an application service is provided by the user copy held by the own device.

### SUMMARY OF THE INVENTION

For example, the technology of JP-2009-252075-A implements a process that, if a usage request is issued from a user, information of the applicable user is called to a user accommodation server at the location. As an example in which such a contrivance as just described is applied to a gate system of a traffic system or the like, a contrivance is conceivable in which right information of a right to use a ticket such as prepaid fee or coupon ticket information or a like right is saved as user information into a center server or the like such that, when the user wants to use the right information, the user can call the user information at a location at which the user wants to use the right information and exercise the right.

Here, for example, for an automatic ticket examination machine of a railway, it is requested that, when calculation relating to usage from a usage request from a user is executed and a result of the calculation is returned, the response be high in order to make it possible for the user to pass the machine without decreasing the walking speed. However, if the process for calling, after a usage request is issued from a user, information of the applicable user into the user accommodation server at the location as descried above, then time is required for the calling of the information, resulting in difficulty to satisfy such a request for a high speed response as described above.

On the other hand, it is conceivable to deploy all user information to user accommodation servers at all locations in order to omit such operation relating to data calling as described above. However, in this case, in order to maintain consistency of user information among the user accommodation servers, it is necessary to perform a synchronization process of user information for all user accommodation servers every time the user information of a certain user changes in any user accommodation server. Therefore, there is the possibility that a large number of synchronization processes may congest and a high load may be applied to a network that couples a user accommodation server at each location and the other user accommodation servers.

The present invention has been made in view of such circumstances as described above, and it is an object of the present invention to provide a technology that can appropriately manage right usage information relating to usage of right information between a plurality of devices having different control areas from one another and decrease the management load of right usage information.

In order to achieve the object described above, according to one aspect of the present invention, there is provided a control management device that manages right usage information relating to usage of right information of a plurality of media in one of three or more control areas, the control management device including a right usage information storage unit configured to store the right usage information of each of the plurality of media, an update unit configured to update the right usage information of any of the media based on a usage result of the medium in the control area, and a synchronization controller configured to transmit the right usage information of the medium updated by the update unit in order from a control area at which arrival possible time of the medium is shorter from among the other control areas.

According to the present invention, right usage information can be appropriately managed between a plurality of devices having different control areas from one another and the management load of right usage information can be reduced.

### BRIEF DESCRIPTION OF THE DRAWINGS

FIG. 1 is a general block diagram of a right information management system according to an embodiment;
FIG. 2 is a view depicting a hardware configuration of an intermediate server, a central server and an intermediate server setting terminal according to the embodiment;
FIG. 3 is a view depicting a configuration of control station information according to the embodiment;
FIG. 4 is a view depicting a configuration of right usage information according to the embodiment;
FIG. 5 is a view depicting a configuration of synchronization timing information according to the embodiment;
FIG. 6 is a view depicting a configuration of prescribed synchronization timing information according to the embodiment;
FIG. 7 is a sequence diagram of a medium usage process and a synchronization process according to the embodiment;
FIG. 8 is a flow chart of a synchronization timing information update process according to the embodiment; and
FIG. 9 is a view depicting a setting screen image according to the embodiment.

### DESCRIPTION OF THE PREFERRED EMBODIMENT

An embodiment is described below with reference to the drawings. It is to be noted that the embodiment described below does not restrict the invention defined in the claims, and all of the elements described in the description of the embodiment and combinations of the elements are not essentially required for the solving means of the invention.

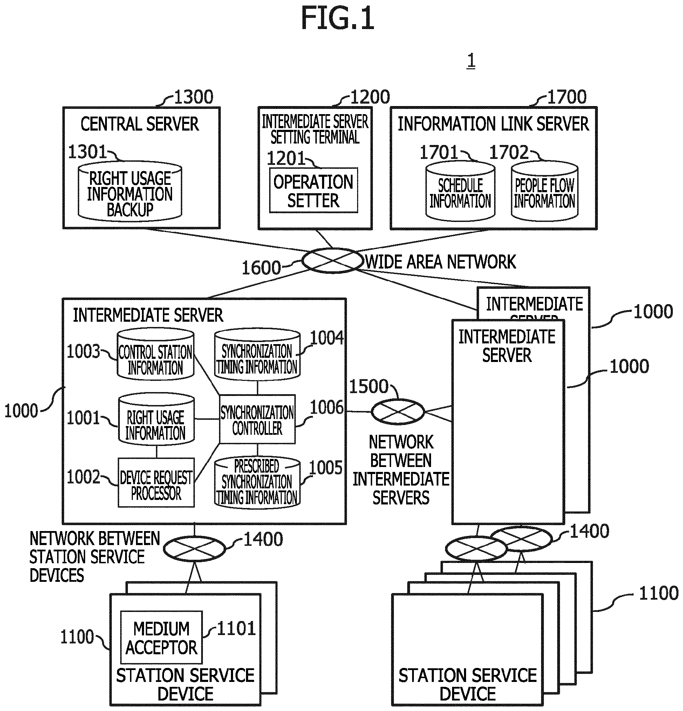

FIG. 1 is a general block diagram of a right information management system according to an embodiment.

The right information management system 1 includes a plurality of (in FIG. 1, three or more) intermediate servers 1000 as an example of control management devices, a plurality of station service devices 1100, an intermediate server setting terminal 1200, a central server (center server) 1300, and an information link server 1700.

The intermediate servers 1000, the central server 1300, the intermediate server setting terminal 1200 and the information link server 1700 are connected to each other by a wide area network 1600. The plurality of intermediate servers 1000 are connected to each other through a network 1500 between intermediate servers. Each of the intermediate servers 1000 is connected to one or more station service devices 1100 controlled by the intermediate server 1000 through a network 1400 between station service devices. Here, the intermediate server 1000 and the station service devices 1100 controlled by the intermediate server 1000 correspond to a control management system.

The intermediate server 1000 executes processes and so forth relating to decisions regarding entering and leaving and so forth at a station. Further, the intermediate server 1000 performs communication relating to a synchronization process and so forth as occasion demands. Further, the intermediate server 1000 receives an instruction for operation setting by the intermediate server setting terminal 1200 and performs operation setting in accordance with the instruction. Further, the intermediate server 1000 performs a synchronization process and so forth of right usage information with the central server 1300.

The intermediate server 1000 includes, as processing function units, a device request processor 1002 as an example of an acceptor, an update unit and a processor, and a synchronization controller 1006, and stores right usage information 1001, control station information 1003, synchronization timing information 1004 and prescribed synchronization timing information 1005.

The right usage information 1001 includes prepaid money amount information (charged money) retained by a medium such as an IC card, an NFC (Near Field Communication) usage medium and right information such as a commuter pass. In the present embodiment, for high speed processing, the right usage information 1001 includes right information regarding each of all issued media that can be used in the right information management system 1.

The synchronization timing information 1004 is information that prescribes a synchronization timing for the other intermediate servers 1000. The synchronization timing information 1004 manages a synchronization timing to be used in the case where the synchronization controller 1006 accepts a notification of right usage information update from the device request processor 1002 and the substance of the update relates to entering (upon starting of usage of a train). The control station information 1003 is information of stations controlled by each intermediate server 1000. The control station information 1003 is used to specify, when the synchronization timing information 1004 is to be created, the boundary of control between the intermediate servers 1000.

The prescribed synchronization timing information 1005 is information that prescribes a synchronization timing for the other intermediate servers 1000. The prescribed synchronization timing information 1005 manages a synchronization timing to be used in the case where the synchronization controller 1006 accepts a notification of right usage information update from the device request processor 1002 and besides the substance of the update relates to leaving (upon ending of usage of a train). In the case where the update substance is leaving, since a period of time in which a utilizer (user) having a medium moves to a different control area cannot be specified from a train schedule (diagram), as the synchronization timing for the other intermediate servers 1000, a fixed value determined with reference to a distance to a station controlled by a different intermediate server 1000 or the like is used.

The device request processor 1002 refers to the right usage information 1001 in response to a request from a station service device 1100 to perform a process relating to usage of right information. In the case where rewrite of the right usage information 1001 (update of a usage result by processing) occurs, the device request processor 1002 issues a notification (right usage information update notification) that the right usage information 1001 is changed to the synchronization controller 1006.

The synchronization controller 1006 controls the synchronization timing between the intermediate servers 1000. If the synchronization controller 1006 accepts a right usage information update notification from the device request processor 1002, then it checks the substance of the change of the right usage information 1001. Further, in the case of entering of a user who owns a medium, the synchronization controller 1006 refers to the control station information 1003 and schedule information 1701, which is retained by the information link server 1700, to update the synchronization timing for this medium of the synchronization timing information 1004. In the case of leaving of a user who owns a medium, the synchronization controller 1006 updates the synchronization timing for this medium of the prescribed synchronization timing information 1005. The synchronization controller 1006 decides on the basis of the setting of the synchronization timing of the synchronization timing information 1004 or the prescribed synchronization timing information 1005 whether or not a synchronization timing comes. In the case where a synchronization timing comes, the synchronization controller 1006 executes a synchronization process regarding the substance updated in the medium of the right usage information 1001 (the substance of an entry corresponding to the medium) for the other intermediate servers 1000 in accordance with the synchronization timing information 1004 and the prescribed synchronization timing information 1005.

Each station service device 1100 is a terminal that performs processing relating to right usage of a medium such as a ticket machine, a ticket-vending machine and an adjustment machine. The station service device 1100 transmits a request (function execution request) for causing the intermediate server 1000, which manages the own device, to execute various processing functions and notifies the user of a result of the request. The station service device 1100 includes a medium acceptor 1101. The medium acceptor 1101 acquires a medium ID (medium identification information) linked to a medium presented by the user to use the station service devices 1100 and notifies the intermediate server 1000 of a function execution request including the medium ID. As an acquisition method of a medium ID, if the medium is of the type that can communicate like an IC card, then the medium ID may be acquired by communication, but in the case where the medium is a printed medium that indicates the medium ID in the form of a barcode, a two-dimensional barcode or the like, image recognition of the medium may be performed to acquire the medium ID.

The central server 1300 manages information of the entire system such as backup of right usage information. The central server 1300 includes a right usage information backup 1301. The central server 1300 performs backup of the right usage information 1001 updated by the intermediate server 1000. It is to be noted that, as an acquisition method of the right usage information 1001 by the central server 1300, the central server 1300 may acquire the right usage information 1001 by issuing an instruction for acquisition to the intermediate server 1000 or may acquire the right usage information 1001 transmitted from the intermediate server 1000.

The intermediate server setting terminal 1200 is a terminal for performing setting relating to operation of the intermediate servers 1000, and accepts settings from a manager of the right information management system 1 and performs operation setting of each intermediate server 1000. The intermediate server setting terminal 1200 includes an operation setter 1201. The operation setter 1201 displays a setting screen image for performing operation setting for the intermediate server 1000, for example, setting relating to limitation of the synchronous data amount of the right usage information 1001, setting relating to control relating to a communication path and so forth, and accepts the substance of such settings through the setting screen image and performs setting in accordance with the accepted substance.

The information link server 1700 acquires and retains information from an external system such as, for example, a train operation system or a station monitoring system. For example, the information link server 1700 retains schedule information 1701 as an example of operation information and people flow information 1702. The schedule information 1701 holds a train ID (mobile body identification information) and information of a place and time relating to each train such as at which station and at which time the train stops. The schedule information 1701 is used to set a synchronization timing of the right usage information 1001 retained by the intermediate server 1000 in accordance with movement of a train. The people flow information 1702 is such information as at which station how many persons get on a train or at which station congestion occurs. The people flow information 1702 can be acquired, for example, on the basis of the applied load to a train or information of monitoring cameras in and around stations and so forth. The people flow information 1702 is used to determine a synchronization timing of the right usage information 1001 from a point of view of the data amount or the like.

Now, a hardware configuration of the intermediate server 1000, central server 1300 and intermediate server setting terminal 1200 is described.

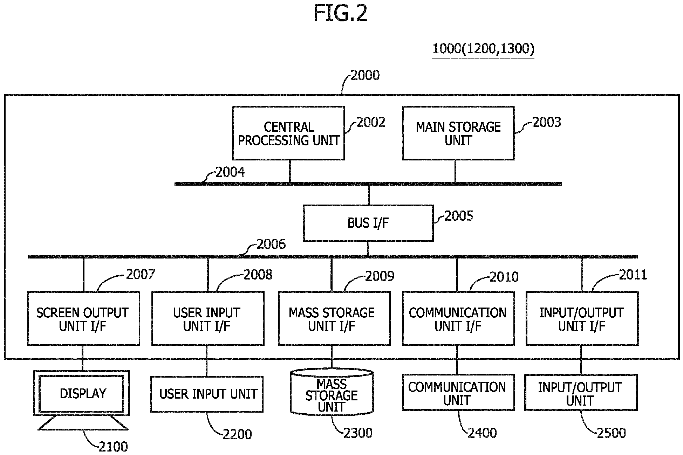

FIG. 2 is a hardware block diagram of the intermediate server, central server and intermediate server setting terminal according to the embodiment.

The intermediate server 1000 (in the present embodiment, also the central server 1300 and the intermediate server setting terminal 1200 have a similar hardware configuration) includes a main body unit 2000, a display 2100, a user input unit 2200, a mass storage unit 2300 as an example of a right usage information storage unit, a communication unit 2400 and an input/output unit 2500.

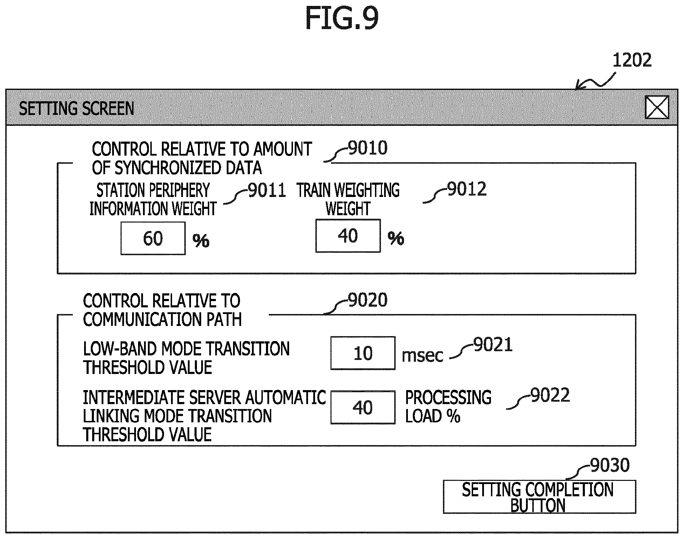

The display 2100 is a device that displays various kinds of information and can display, for example, a setting screen (refer to FIG. 9) hereinafter described, a processing situation, information for operating a basic program and so forth. The input/output unit 2500 is a drive device capable of reading and writing an external recording medium, a finger vein reading device for performing user authentication or the like. The user input unit 2200 is a device for receiving an input from a user such as, for example, a keyboard or a mouse. The user input unit 2200 outputs inputted information to the main body unit 2000.

The mass storage unit 2300 is a storage device such as, for example, a HDD (Hard Disk Drive), a SSD (Solid State Drive) or the like. The mass storage unit 2300 stores, in a state in which the power supply to the device is off or when a program is not executed, a basic program for implementing functions, temporary storage information of a result of processing when a program is executed, and programs and various kinds of information for executing various processes. For example, the mass storage unit 2300 of the intermediate server 1000 stores the right usage information 1001, control station information 1003, synchronization timing information 1004 and prescribed synchronization timing information 1005. Further, the mass storage unit 2300 of the central server 1300 stores the right usage information backup 1301. It is to be noted that, when various processes are to be executed, programs and data stored in the mass storage unit 2300 are read out into the main storage unit 2003 by a central processing unit 2002, and the read out programs are executed by the central processing unit 2002.

The communication unit 2400 is a device that communicates with an external device, for example, through the Ethernet (registered trademark). The communication unit 2400 communicates with an external device (different intermediate server 1000, central server 1300, intermediate server setting terminal 1200, information link server 1700 or the like), for example, through the wide area network 1600 or the network 1500 between intermediate servers. The input/output unit 2500 is a drive device capable of reading and writing an external recording medium, a finger vein reading device that reads finger veins for performing user authentication or the like.

The main body unit 2000 includes a central processing unit 2002, a main storage unit 2003, an internal bus 2004, a bus I/F (interface) 2005, an external bus 2006, a screen output unit I/F 2007, a user input unit I/F 2008, a mass storage unit I/F 2009, a communication unit I/F 2010 and an input/output unit I/F 2011.

The central processing unit 2002, main storage unit 2003 and bus I/F 2005 are connected to each other by the internal bus 2004. The bus I/F 2005 is connected to the internal bus 2004 and the external bus 2006. The screen output unit I/F 2007, user input unit I/F 2008, mass storage unit I/F 2009, communication unit I/F 2010 and input/output unit I/F 2011 are connected to each other by the external bus 2006. Data inputting/outputting between the various I/Fs 2007 to 2011 and the central processing unit 2002 or the main storage unit 2003 are executed through the internal bus 2004, bus I/F 2005 and external bus 2006.

The central processing unit 2002 performs arithmetic operation in execution and so forth of a program read out into the main storage unit 2003. The synchronization controller 1006 and the device request processor 1002 of the intermediate server 1000 are constructed by execution of a program by the central processing unit 2002. The operation setter 1201 of the intermediate server setting terminal 1200 is configured by execution of a program by the central processing unit 2002 in the intermediate server setting terminal 1200.

The main storage unit 2003 is configured, for example, from a RAM (Random Access Memory) and is used as a process region when a program is executed by the central processing unit 2002 and a temporary storage region of data. The main storage unit 2003 temporarily stores a basic program such as, for example, an OS (Operating System), a program for executing a process or temporary information.

The screen output unit I/F 2007 is an I/F for connecting to the display 2100 and outputs information acquired through the external bus 2006 to the display 2100. The user input unit I/F 2008 is an I/F for connecting to the user input unit 2200 and outputs information inputted from the user input unit 2200 to the central processing unit 2002 through the external bus 2006. The mass storage unit I/F 2009 is an I/F for connecting to the mass storage unit 2300 and mediates data input/output between the mass storage unit 2300 and the external bus 2006. The communication unit I/F 2010 is an I/F for connecting to the communication unit 2400 and mediates data input/output between the communication unit 2400 and the external bus 2006. The input/output unit I/F 2011 is an I/F for connecting to the input/output unit 2500 and mediates data input/output between the input/output unit 2500 and the external bus 2006.

Now, description is given of various kinds of information stored in the mass storage unit of the intermediate server 1000.

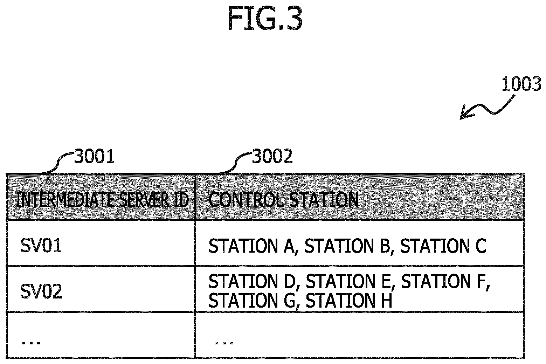

FIG. 3 is a configuration view of control station information according to the embodiment.

The control station information 1003 is information for managing stations to be controlled by each intermediate server 1000 and manages an entry (row) for each intermediate server 1000. An entry of the control station information 1003 includes columns for an intermediate server ID 3001 and a control station 3002. In the intermediate server ID 3001, identification information of an intermediate server 1000 (ID: intermediate server ID) is stored. In the control station 3002, information that can uniquely specify one or more (a single or a plurality of) stations controlled by an intermediate server 1000 corresponding to the entry (for example, a station name, a station code or the like) is stored. The control station information 1003 is information that is same among all intermediate servers 1000. According to this control station information 1003, stations controlled by each intermediate server 1000 (namely, a control area) can be specified.

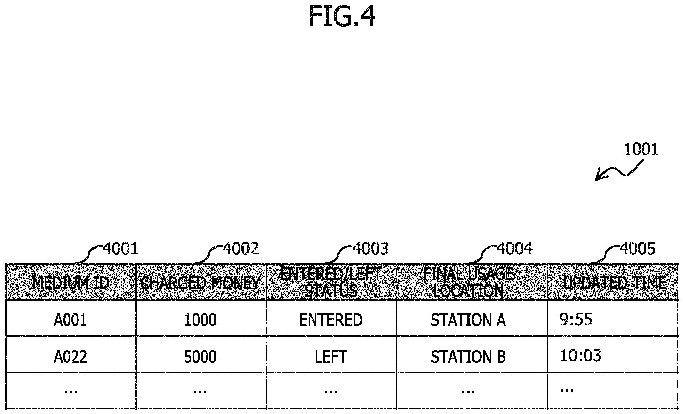

FIG. 4 is a configuration view of right usage information according to the embodiment.

The right usage information 1001 is information for managing usage information of rights of each medium (right usage information) and has an entry (individual usage information) for each medium. The entry of the right usage information 1001 includes columns for a medium ID 4001, a charged money 4002, an entered/left status 4003, a final usage location 4004 and updated time 4005.

In the medium ID 4001, an ID (identifier: medium ID) uniquely corresponding to a medium (for example, an IC card, a ticket or the like). The medium ID is used as a key for searching for right information linked to the medium and information regarding a usage situation of the right information. In the charged money 4002, right information of the medium corresponding to the entry is stored. As the right information, for example, a prepaid amount of money (amount of charged money), a remaining count of a coupon ticket, plan ticket information, account linking information of a bank or credit count and so forth are available.

In the entered/left status 4003, information indicative of whether or not a user who holds a medium corresponding to an entry has entered or left a station of transportation facilities (entered/left information) is stored. By using the entered/left information, it can be detected whether or not the user has entered or left illegally. Further, if the entered/left information indicates that the user is inside at present, then it is recognized that the user will move to some station using a train and then will leave the station, and it is recognized that price calculation and settlement upon leaving are required. On the other hand, if the entered/left information indicates that the user is outside, then it is recognized that movement having no relation to movement of a train is performed first and then the medium will be used at (will enter) some station.

In the final usage location 4004, information indicative of a station at which entering/leaving has been performed finally (final usage location information) is stored. For example, if the entered/left information of the entered/left status 4003 indicates "entered," then the final usage location information indicates where the user has entered, namely, indicates a location that is a start point in price calculation upon leaving. In the updated time 4005, information of time at which final usage was performed (updated time) is stored.

According to this right usage information 1001, when the entered/left information of an entry changes over to "entered," by collating the final usage location and the updated time corresponding to this entry and the schedule information 1701 with each other, boarding candidate information in regard to at which time and which station the user entered and which train was possibly used by the user can be obtained. It is to be noted that the information managed with the right usage information 1001 is backed up as the right usage information backup 1301 in the central server 1300. The right usage information backup 1301 has a configuration similar to that of the right usage information 1001.

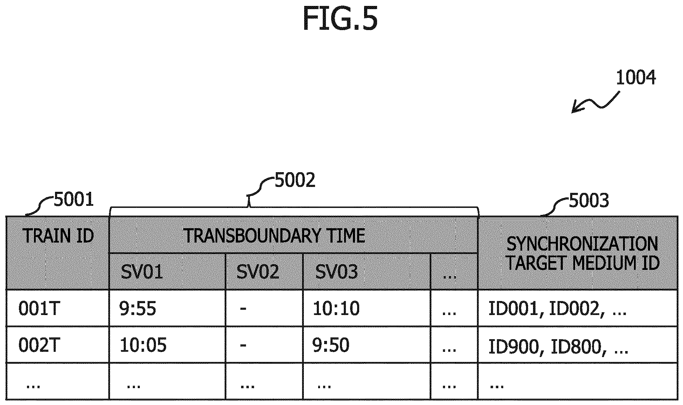

FIG. 5 is a configuration view of synchronization timing information according to the embodiment.

The synchronization timing information 1004 is information that defines a timing (synchronization timing) at which right usage information regarding a medium that is held by a user and becomes a management target (management target by the right usage information 1001) is to be synchronized with a different intermediate server 1000. This synchronization timing is defined on the basis of movement time of a train usable by the user in the case where the user moves with the train. The synchronization timing information 1004 stores, for example, an entry for each train the user can use. The entry of the synchronization timing information 1004 includes columns for a train ID 5001, a transboundary time 5002 and a synchronization target medium ID 5003.

The train ID 5001 has stored therein an ID for uniquely specifying a train (train ID). The train ID becomes a search key when the intermediate server 1000 controls the timing at which synchronization is to be performed.

In the transboundary time 5002, time information for performing synchronization of right usage information for a different intermediate server 1000 is stored. Here, the time information corresponds to arrival possible time, and that the time of the time information is early signifies that the arrival possible time is short. In the transboundary time 5002, a set of the intermediate server ID of each intermediate server 1000 and time information of limit time when synchronization of right usage information is to be performed for the intermediate server 1000 (synchronization limit time information) is stored. Consequently, synchronization limit time information for each intermediate server is set, and for an intermediate server 1000 of a control area in which arrival of the train is earlier, earlier time (shorter arrival possible time) is set. Synchronization of right usage information to each intermediate server 1000 (individual usage information for each medium) is executed on the basis of the time of the time limit. For example, synchronization is executed at a predetermined period of time before the time of the time limit. Consequently, synchronization of individual usage information for the intermediate servers is executed in order beginning with an intermediate server in a region in which the arrival possible time is shorter.

In the synchronization target medium ID 5003, medium IDs of media held by one or more users who may possibly use a train corresponding to the entry, namely, medium IDs of one or more media that become a synchronization target, are stored. Each of the medium IDs is one of medium IDs registered in the right usage information 1001. It is to be noted that a same medium ID may be registered in different entries. For example, in the case where there are trains that go in different directions, a same medium ID may be associated with individual ones of entries of train IDs of the trains that go in the directions. Further, also in regard to trains that go in a same direction, in the case where there is a train that does not depart first but is to overtake a different train, which departs first, halfway and the transboundary time thereof to the control area of some intermediate server 1000 is earliest, a same medium ID may be associated with both an entry of the train ID of the train that departs first and an entry of the train ID of the train that overtakes the first train. For the right usage information (namely, for the individual usage information) regarding a medium of a medium ID stored in the synchronization target medium ID 5003, a synchronization process with a corresponding intermediate server 1000 is performed on the basis of the time described in the transboundary time 5002. It is to be noted that, although there is the possibility that a train ID may be subjected to some change to a train ID on the schedule by return, division, consolidation or the like, in this case, the train ID may be taken over to the changed train ID.

The synchronization timing information 1004 is set by the synchronization controller 1006. In particular, in the case where update of the right usage information 1001 is accepted from the device request processor 1002 and besides the substance of the update relates to entering, the synchronization controller 1006 sets synchronization timing information 1004 using schedule information. The synchronization controller 1006 refers to the schedule information 1701 of the information link server 1700 to determine by which train a medium linked to the updated entry of the right usage information 1001 may possibly move. Further, the synchronization controller 1006 refers to the control station information 1003 to determine at which timing this train moves into the control area of a different intermediate server 1000, specifies till which timing it is necessary to perform synchronization, and prescribes information of the specified time into the transboundary time 5002 of an entry of the synchronization timing information 1004 corresponding to this train.

It is considered that this synchronization timing information 1004 indicates an assigned range regarding which intermediate server 1000 is to perform synchronization of right usage information (individual usage information) of the medium ID. For example, in the case where an ID 1234 is included as the medium ID in the synchronization timing information 1004 of an intermediate server A, any other intermediate server 1000 than the intermediate server A does not at all perform a synchronization process of right usage information (individual usage information) regarding the medium of the ID 1234. A change of the synchronization assignment is performed, for example, every time a change of right usage information (individual usage information) such as usage of a ticket machine is performed, and an intermediate server 1000 that controls the location at which such change of right usage information occurs becomes a new synchronization-assigned intermediate server. By performing such operation as described above, congestion of a synchronization process arising from that a plurality of intermediate servers become synchronization-assigned intermediate servers and a synchronization process based on old information can be prevented.

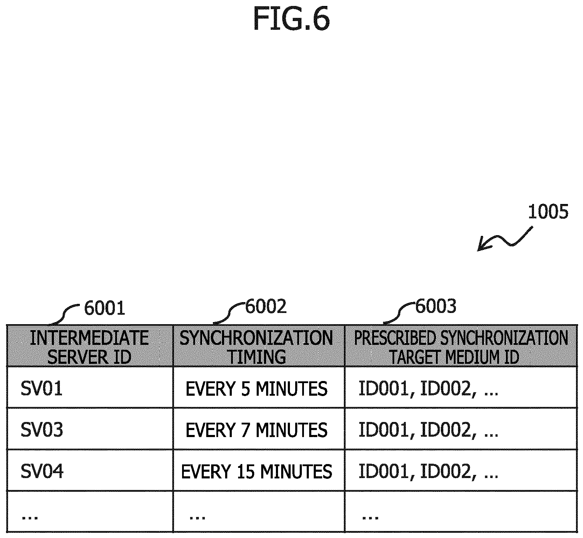

FIG. 6 is a configuration view of prescribed synchronization timing information according to the embodiment.

The prescribed synchronization timing information 1005 is information that defines a timing (synchronization timing) at which right usage information regarding a medium that is held by a user and becomes a management target (management target in the right usage information 1001) is to be synchronized with a different intermediate server 1000. This synchronization timing (referred to as prescribed synchronization timing) is defined on the basis of movement time in the case where the user moves using any other than a train. The prescribed synchronization timing information 1005 stores an entry for each intermediate server 1000. The entry of the prescribed synchronization timing information 1005 includes columns for an intermediate server ID 6001, a synchronization timing 6002 and a prescribed synchronization target medium ID 6003.

In the intermediate server ID 6001, an intermediate server ID for uniquely specifying each intermediate server 1000 is stored. The intermediate server ID becomes a search key when the intermediate server 1000 controls the timing at which synchronization of right usage information is to be performed for the other intermediate servers 1000. In the synchronization timing 6002, information indicative of a period in which right usage information is to be synchronized with the intermediate server 1000 corresponding to the entry (synchronization period information) is stored. The synchronization period information is information relating to a synchronization period determined on the basis of a distance relation between the intermediate server 1000 in which the prescribed synchronization timing information 1005 is stored and the intermediate server corresponding to the entry and so forth, and is time at which, for example, in the case where a user freely moves independently of movement of a train, the user arrives at a control area of the intermediate server 1000 corresponding to the entry (an example of the arrival possible time). In the prescribed synchronization target medium ID 6003, a medium ID that becomes a target of synchronization is stored. In particular, this signifies that individual usage information corresponding to the medium ID becomes a target of synchronization.

When a medium ID that becomes a target for performing synchronization occurs in accordance with the prescribed synchronization timing information 1005, namely, in the case where update of the right usage information 1001 from the device request processor 1002 is accepted and besides the update substance relates to entering, the synchronization controller 1006 stores the medium ID into the prescribed synchronization target medium ID 6003 in all entries. The synchronization controller 1006 may erase, in the case where a synchronization process for the intermediate server 1000 corresponding to the entry is carried out, the entire prescribed synchronization target medium ID 6003 of the entry such that normally a medium ID for which synchronization is not performed as yet is stored into the prescribed synchronization target medium ID 6003.

Now, processing operation of the right information management system 1 is described.

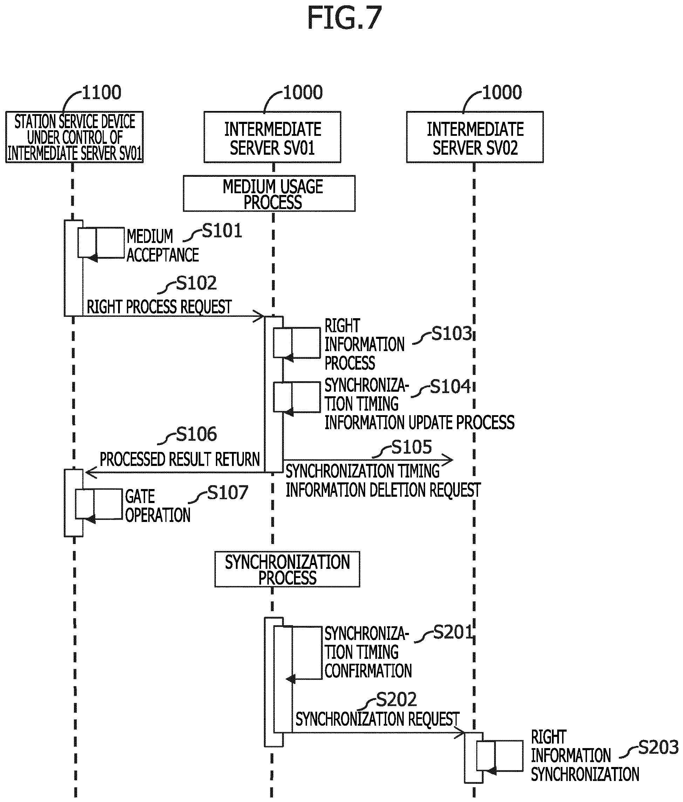

FIG. 7 is a sequence diagram of a medium usage process and a synchronization process according to the embodiment.

The medium usage process is a process relating to time at which a user uses a medium on the station service device 1100. Here, in FIG. 7, the intermediate server 1000 that controls a station at which a station service device 1100 to be used by a user is provided is an intermediate server SV01, and the intermediate server 1000 that controls a neighboring area of the intermediate server SV01 is an intermediate server SV02.

The medium acceptor 1101 of a station service device 1100 (here, a ticket machine) subordinate (under control of) the intermediate server SV01 receives information including a medium ID from a medium held over by the user and executes a predetermined cryptographic process and so forth for the received information to extract the medium ID (S101), and transmits a right process request including the extracted medium ID to the intermediate server SV01 that controls the station service device 1100 (S102). Here, the right process request is a request to be transmitted when the intermediate server 1000 having the right usage information 1001 is caused to execute a necessary station service process.

The device request processor 1002 of the intermediate server SV01 refers to the right usage information 1001 in response to the right process request received from the station service device 1100 to execute a station service process corresponding to the right process request (S103). For example, in the case where the station service device 1100 transmits a right process request for requesting an entering process, the device request processor 1002 specifies an entry in the right usage information 1001 using the medium ID included in the right process request, and confirms whether or not charged money stored in the charged money 4002 of the specified entry is equal to or greater than a minimum remaining money amount for entering. In the case where the charged money amount is equal to or greater than the minimum remaining money amount, the device request processor 1002 makes a decision of passage OK (admission permission) and rewrites the value of the entered/left status 4003 corresponding to the entry to "entered." However, in the case where the charged money amount is not equal to or greater than the minimum remaining money amount, the device request processor 1002 makes a decision of passage inhibition (passage NG). On the other hand, in the case where the station service device 1100 transmits a right process request for requesting a leaving process, the device request processor 1002 specifies an entry in the right usage information 1001 using the medium ID included in the right process request and calculates a price from the final usage location (boarding station) stored in the final usage location 4004 of the entry to the applicable station at which the station service device 1100 is installed. If the charged money amount of the charged money 4002 is sufficient, then the device request processor 1002 subtracts the price from the charged money amount of the charged money 4002 and rewrites the entered/left status 4003 to "entered."

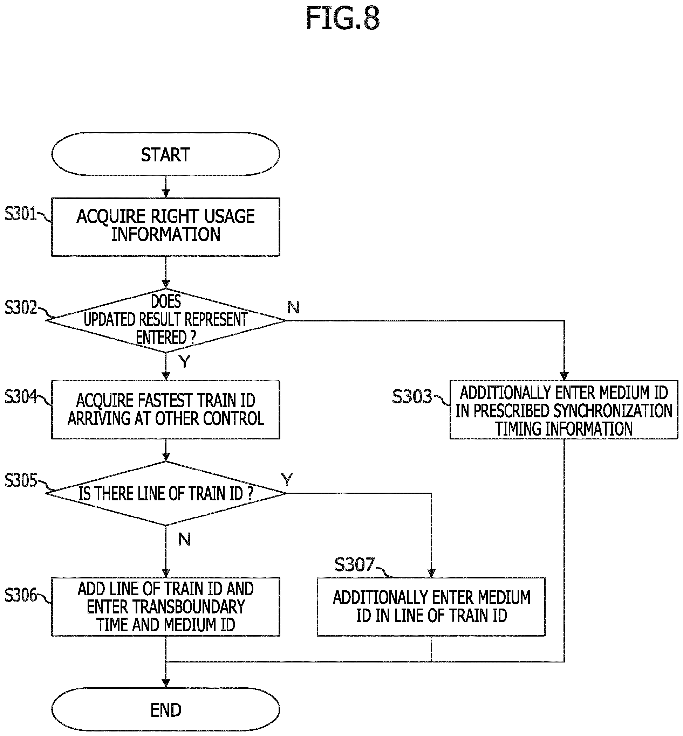

Then, in the case where the value set, for example, in the entered/left status 4003 or the charged money 4002 of the entry of the right usage information 1001 is changed, the synchronization controller 1006 executes a synchronization timing information update process (refer to FIG. 8) for updating the synchronization timing information 1004 or the prescribed synchronization timing information 1005 that manages the synchronization timing for synchronizing the changed value (S104). It is to be noted that, in the case where update of the right usage information 1001 is not performed together as in the case where it is decided that passage is to be inhibited, for example, because of shortage of the charged money or the like, the synchronization controller 1006 does not execute the process at step S104. It is to be noted that, in the case where step S104 is to be executed, the synchronization controller 1006 may transmit a synchronization request including data of the changed entry of the right usage information 1001 to the central server 1300 such that the central server 1300 updates the right usage information backup 1301.

Then at step S104, after update of the synchronization timing information 1004 (storage of the medium ID into the synchronization target medium ID 5003 of the entry) or update of the prescribed synchronization timing information 1005 (addition of the medium ID to the prescribed synchronization target medium ID 6003 of the entry) is performed, the synchronization controller 1006 transmits a request (synchronization timing information deletion request) to instruct deletion of the synchronization timing information regarding the corresponding medium to all of the other intermediate servers 1000 by which synchronization of the medium ID has been managed (S105). Consequently, since the other intermediate servers 1000 stop later transmission of an update request according to the change substance in the past corresponding to this medium, useless execution of processing can be prevented and transmission of useless data to the network can be prevented. It is to be noted that a synchronization timing information deletion request may be transmitted after every fixed time interval or collectively at a timing relating to a train service, and this makes it possible to reduce the load to the network. It is to be noted that the intermediate server ID of each of the other intermediate servers 1000 that are a transmission destination of the synchronization timing information deletion request and have managed synchronization of the right usage information corresponding to the medium ID can be acquired by acquiring a final usage location (boarding station) from the final usage location 4004 of an entry of the right usage information 1001 corresponding to this medium ID and referring to the control station information 1003 on the basis of the final usage location.

Then, the device request processor 1002 returns a processing result of the right information process at step S103 to the station service device 1100 of the source of the request (S106). For example, in the case where the charged money stored in the charged money 4002 of the entry of the right usage information 1001 linked to the medium has no sufficient remaining amount, in the case entering is performed again while the entered/left status 4003 remains in the state of "entered" or in a like case, passage inhibition (entering inhibition, leaving inhibition) is returned as a processing result. On the other hand, if the charged money has a sufficient remaining amount and there is no process abnormality, then passage OK (entering OK, leaving OK) is returned as a processing result.

Then, the station service device 1100 executes operation of a gate of the station service device 1100 on the basis of the processing result of the right information process returned from the intermediate server SV01 (S107). For example, in the case where passage OK is returned, the station service device 1100 operates such that the gate is placed into a passage permitting state, but in the case where passage inhibition is returned, the station service device 1100 operates such that the gate is place into a passage inhibiting state.

Now, a synchronization process is described. The synchronization process is a process for synchronizing the update substance of the right usage information 1001 in an intermediate server 1000 with the other intermediate servers 1000.

The synchronization controller 1006 of the intermediate server SV01 confirms an intermediate server 1000 of a charring out destination at which a synchronization timing at which the update substance of the right usage information 1001 is to be synchronized comes and for which synchronization is to be carried out and the update substance to be synchronized (S201). In particular, the synchronization controller 1006 confirms, targeting an entry corresponding to each train ID of the synchronization timing information 1004, whether or not the current time is within a predetermined range from transboundary time of the transboundary time 5002. In the case where the current time is within the predetermined range from the transboundary time, the synchronization controller 1006 determines the intermediate server 1000 of the intermediate server ID (here, for example, SV02) corresponding to the transboundary time as a synchronization destination and determines the entries of the right usage information 1001 corresponding to one or more medium IDs stored in the synchronization target medium ID 5003 as the update substance to be synchronized. Further, the synchronization controller 1006 refers to the entries of the prescribed synchronization timing information 1005 to decide whether or not the period time of the synchronization timing 6002 elapses from a predetermined point of time. In the case where the period time elapses, the synchronization controller 1006 determines the intermediate server 1000 corresponding to this entry as a synchronization destination and determines the entry of the right usage information 1001 corresponding to the medium ID stored in the prescribed synchronization target medium ID 6003 of the entry as the update substance to be synchronized.

Then, the synchronization controller 1006 transmits a synchronization request including data of the entry (individual usage information) of the right usage information 1001 of the medium ID determined as the update substance to be synchronized to the intermediate server 1000 determined as the synchronization destination (S202). In the present embodiment, in the case where data of entries of a plurality of medium IDs are to be transmitted to the same intermediate server 1000, the synchronization controller 1006 collectively transmits them to the intermediate server 1000. Since data of entries of a plurality of medium IDs are collectively transmitted in this manner, the communication efficiency between the intermediate server SV01 and the intermediate server SV02 can be enhanced in comparison with that in an alternative case in which the data of the individual entries are transmitted individually. It is to be noted that, at step S202, the synchronization controller 1006 may transmit a synchronization request including data of an entry of the right usage information 1001 of a medium ID determined as the update substance to be synchronized to the central server 1300 such that the right usage information backup 1301 is updated by the central server 1300.

The synchronization controller 1006 of the intermediate server SV02 receives the synchronization request and updates the corresponding entry of the right usage information 1001 of the intermediate server SV02 on the basis of the data of the entry of the right usage information 1001 included in the synchronization request to synchronize the entry of the right usage information 1001 (S203). This makes it possible for the right usage information corresponding to this medium to be reflected on the intermediate server SV02 before the user who holds the medium moves to the control area of the intermediate server SV02 and uses the medium. It is to be noted that, in the case where the updated time of the entry included in the received synchronization request is older than the own updated time of the corresponding entry of the right usage information 1001, the synchronization controller 1006 does not execute an update process corresponding to this synchronization request. This makes it possible to appropriately manage the entries of the right usage information 1001 to a new state.

Now, the synchronization timing information update process (S104) is described in detail.

FIG. 8 is a flow chart of the synchronization timing information update process according to the embodiment.

The synchronization controller 1006 acquires an updated entry (individual usage information) corresponding to a medium ID of a processing target (target medium ID) from the right usage information 1001 (S301). Then, the synchronization controller 1006 decides whether or not the value of the entered/left status 4003 of the entry indicates "entered" (S302).

In the case where a result of this indicates that the value of the entered/left status 4003 is "entered" (S302: Y), since this signifies that the user has entered from a ticket gate, the synchronization controller 1006 advances its processing to S304. On the other hand, in the case where the value of the entered/left status 4003 is not "entered" (S302: N), since this signifies that the user has left from a ticket gate, the synchronization controller 1006 advances the processing to S303. By changing the process to be executed depending upon the value of the entered/left status 4003 in this manner, the timing for synchronization can be changed between a synchronization process upon entering and a synchronization process upon leaving.

At step S303, the synchronization controller 1006 executes a process for setting a synchronization timing in the case where the user leaves from the ticket gate and ends the synchronization process. In particular, the synchronization controller 1006 additionally describes a target medium ID corresponding to the entry in the prescribed synchronization target medium ID 6003 of each entry of the prescribed synchronization timing information 1005. As a result, the timing at which the individual usage information corresponding to the target medium ID is to be synchronized is set to a timing until the user who holds the medium reaches a control range of a different intermediate server 1000. As a result, even if the user leaves from the ticket gate, when the user reaches the control area of a different intermediate server 1000, the entry of the target medium ID of the right usage information 1001 in the intermediate server 1000 has been updated to the latest state, and various processes in the control area of the different intermediate server 1000 are executed appropriately.

On the other hand, at step S304, the synchronization controller 1006 regards the time of the updated time 4005 of the entry as entering time and refers to the schedule information 1701 to acquire the train ID of a train, which can be boarded by the user who holds the medium and will reach the control area of a different intermediate server 1000 first, in regard to all directions (for example, up and down) in which the train can move from this station. For example, in the case where a local train and an express train that is to overtake the local train are available as trains in an up direction and the local train will reach a neighboring control area first but the express train will reach a next neighboring control area first, the synchronization controller 1006 acquires train IDs of the local train and the express train. By this process, the synchronization controller 1006 can grasp information that becomes a basis of decision of the earliest time at which the medium held by the user can move to each of the control areas of the other intermediate servers 1000.

Then, the synchronization controller 1006 decides whether or not the synchronization timing information 1004 includes an entry corresponding to any of the acquired train IDs (each referred to, in the description of the synchronization timing information update process, as acquired train ID) (S305). It is to be noted that, in the case where a plurality of acquired train IDs are available, the synchronization controller 1006 executes processes at steps beginning with S305 for each of the acquired train IDs.

If a result of this indicates that the synchronization timing information 1004 does not include an entry corresponding to the acquired train ID (S305: N), then the synchronization controller 1006 performs a process for registering the entry of the acquired train ID into the synchronization timing information 1004 (S306) and ends the processing. In particular, the synchronization controller 1006 adds a new entry to the synchronization timing information 1004 and stores the acquired train ID into the train ID 5001 of this entry. Then, the synchronization controller 1006 refers to the control station information 1003 to confirm control stations other than that of the intermediate server ID of the own intermediate server 1000. Then, the synchronization controller 1006 refers to the schedule information 1701 to record the time at which the train of the acquired train ID will arrive at a control station of a different intermediate server 1000 first into the transboundary time 5002. It is to be noted that, in the case where the train of the acquired train ID is to reach control stations of a plurality of different intermediate servers 1000, the synchronization controller 1006 records the time at which the control station is reached first for each of the intermediate servers 1000 into the transboundary time 5002. Then, the synchronization controller 1006 records the target medium ID into the synchronization target medium ID 5003 of the entry and ends the processing. If this entry is used, then by transmitting, before the transboundary time of the transboundary time 5002 comes, the individual usage information corresponding to the medium ID stored in the synchronization target medium ID 5003 to the intermediate server 1000 that controls the control area for synchronization, no influence is had on the right information process in the intermediate server 1000.

On the other hand, in the case where the synchronization timing information 1004 includes an entry that corresponds to the acquired train ID (S305: Y), the synchronization controller 1006 performs a process for adding the target medium ID to the entry of the acquired train ID of the synchronization timing information 1004 (S307) and then ends the processing. In particular, the synchronization controller 1006 additionally describes the target medium ID into the synchronization target medium ID 5003 of the entry of the acquired train ID of the synchronization timing information 1004. If this entry is used, then by transmitting, before the transboundary time of the transboundary time 5002 comes, a plurality of pieces of individual usage information corresponding to the plurality of medium IDs stored in the synchronization target medium ID 5003 collectively to the intermediate server 1000 that controls the control area for synchronization, no influence is had on the right information process in the intermediate server 1000 while congestion of communication is avoided.

Now, setting of operation of the components of the intermediate server 1000 and the central server 1300 is described.

FIG. 9 is a view depicting a setting screen image according to the embodiment. The setting screen image is a screen image displayed by the operation setter 1201 of the intermediate server setting terminal 1200.

The setting screen image 1202 includes a data amount control setting region 9010, a communication path control setting region 9020 and a setting completion button 9030. In the data amount control setting region 9010, an adjustment item relative to the amount of synchronized data can be set, and in the communication path control setting region 9020, an adjustment item relative to a situation of a communication path can be set. Since the amount of synchronized data and the situation of the communication path vary depending upon time even within one day, by setting the adjustment items appropriately, the right usage information can be synchronized appropriately.

Here, the amount of data in synchronization of right usage information is investigated. For example, in the case where users having media rush to a certain station for traffic reasons or other reasons, the data amount of right usage information of a synchronization target increases. In such a case as just described, only if synchronization is performed at a synchronization timing determined in advance (synchronization timing set in the synchronization timing information 1004 or the prescribed synchronization timing information 1005), there is the possibility that the load of communication becomes excessive. Therefore, there is a case in which it is better to perform leveling of the communication load by starting transmission of part of data of the synchronization target before every synchronization timing. Therefore, a setting item to be used in execution of such a process for leveling the communication load as just described is accepted in the data amount control setting region 9010.

The data amount control setting region 9010 includes a station periphery information weight setting region 9011 and a train weighting weight setting region 9012. The station periphery information weight setting region 9011 is a region to which a weight is to be set which indicates to which degree right information obtained using such information as monitoring cameras in a station or a congestion situation around the station is to be used as a decision material for prediction of the number of use. Further, the train weighting weight setting region 9012 is a region to which a weight is set which indicates to which degree the number of use of right information is to be set on the basis of information of the weight of a specific train (which corresponds to a rough number of users who are on the specific train). On the basis of the weights set in the regions described, especially in the case where many users are on the train, the synchronization controller 1006 performs division of a synchronization timing (namely, determination of a synchronization timing at which part of data is to be transferred in advance). It is to be noted that such information as monitoring cameras in a station or a confusion situation around a station or information of the weight of a train are stored in the people flow information 1702 held by the information link server 1700.

The communication path control setting region 9020 includes a low-band mode transition threshold value setting region 9021 and an intermediate server automatic linking mode transition threshold value setting region 9022. In those setting regions 9021 and 9022, a threshold value when, in the case where the frequency band becomes insufficient or in the case the intermediate server load increases, changeover to a low-band mode or an intermediate server automatic linking mode is to be performed.

The low-band mode transition threshold value setting region 9021 is a region in which a threshold value for deciding transition to the low-band mode is to be set. The low-band mode is a mode in which synchronization is to be performed while the frequency band of a network that is used for synchronization of the right usage information 1001 such as the wide area network 1600 and the network 1500 between intermediate servers is taken into consideration. In this mode, the synchronization controller 1006 takes a maximum available bandwidth of each network, a steady bandwidth usage, a function other than the synchronization function of the other intermediate servers 1000, maximum available bandwidths of the other systems and predictions into consideration to perform advancement of divisional transmission or a transmission timing of synchronization data. Since the decision of transition to the low-band mode can be performed, for example, with reference to a response of the frequency band or the like, to the low-band mode transition threshold value setting region 9021, response time is set as a threshold value.

The intermediate server automatic linking mode transition threshold value setting region 9022 is a region in which a threshold value for deciding transition of the intermediate server automatic linking mode is set. In this intermediate server automatic linking mode, the synchronization controllers 1006 notify each other of a synchronization timing and a communication amount among the intermediate servers 1000, and the synchronization controller 1006 performs a synchronization process taking load situations of them and so forth into consideration. This intermediate server automatic linking mode is used in the case where the processing load increases in one of the intermediate servers 1000 and a process as expected is not performed. To the intermediate server automatic linking mode transition threshold value setting region 9022, for example, a processing load of an intermediate server 1000 is set as a threshold value.

The setting completion button 9030 is a button for accepting completion of setting on the setting screen image 1202 and storing the setting substance into the synchronization controller 1006 of each intermediate server 1000. If the setting completion button 9030 is depressed, then the operation setter 1201 instructs the intermediate server 1000 to execute setting on the setting screen image 1202. Consequently, each intermediate server 1000 executes various processes in accordance with the setting.

It is to be noted that the present invention is not limited to the embodiment described above and can be carried out in suitably modified forms without departing from the subject matter of the present invention.

For example, in the embodiment described above, in the case where an intermediate server 1000 performs a station service process using the right usage information 1001, the station service process may be executed after it is confirmed that the right usage information 1001 is synchronized appropriately. As a method for confirming whether or not the right usage information 1001 is synchronized appropriately, for example, time at which a synchronization process is to be executed (synchronization execution time) by the synchronization controller 1006 of each intermediate server 1000 may be conveyed to the other intermediate servers 1000 such that each intermediate server 1000 performs the confirmation depending upon whether or not the synchronization is executed at the notified time. As an alternative, in the case where a synchronization process is performed for the other intermediate servers 1000, also a synchronization process may be executed for the central server 1300 such that an intermediate server 1000 that executes a station service process confirms by comparison between the updated time in the central server 1300 and the updated time in the own server.

Further, while, in the embodiment described above, a train is taken as an example of a mobile body used with a medium, the present invention is not limited to this, and the mobile body may be, for example, a bus, a ship or an aircraft. The point is that the mobile body may be any mobile body that is operated in accordance with a schedule.

Further, while, in the embodiment described above, a station service process in which right information is used is executed by an intermediate server 1000 to reduce functions required for the station service device 1100, the present invention is not limited to this, and, for example, a station service process in which right information is used may be executed by the station service device 1100.

Further, part of all of processes performed by the central processing unit 2002 in the embodiment described above may be performed by a hardware circuit for exclusive use. Further, a program in the embodiment described above may be installed from a program source. The program source may be a program distribution server or a storage medium (for example, a portable storage medium).

## Claims

1. A control management device that manages right usage information relating to usage of right information of a plurality of media in one of three or more control areas, the control management device comprising:
a right usage information storage unit configured to store the right usage information of each of the plurality of media;
an update unit configured to update the right usage information of any of the media based on a usage result of the medium in the control area; and
a synchronization controller configured to transmit the right usage information of the medium updated by the update unit in order from a control area at which arrival possible time of the medium is shorter from among the other control areas.

2. The control management device according to claim 1, wherein
the right usage information storage unit stores the right usage information so as to be identifiable with medium identification information that is identification information of the media;
the control management device further comprising:
an acceptor configured to accept medium identification information of the medium of a usage target; and
a processor configured to specify the right usage information based on the medium identification information and determine the usage result based on the specified right usage information and a usage substance by the medium.

3. The control management device according to claim 1 or 2, wherein
the synchronization controller specifies arrival possible time in which the medium arrives shortest at the other control area based on operation information of a mobile body that moves from the control area to the other control area.

4. The control management device according to claim 3, wherein
the synchronization controller specifies, based on operation information of a mobile body that moves from the control area to the other control area, a mobile body with which the medium arrives shortest at the other control area, stores medium identification information of the medium in an associated relation with mobile body identification information that is identification information of the mobile body, and transmits, before the arrival possible time elapses, one or more pieces of right usage information corresponding to one of more pieces of medium identification information associated with the mobile body identification information collectively to the other control area.

5. The control management device according to claim 3 or 4, wherein
the synchronization controller specifies, where usage of the medium is starting of usage of the mobile body, arrival possible time in which the medium arrives shortest at the other control area based on operation information of the mobile body that moves from the control area to the other control area, and adopts, where usage of the medium is ending of usage of the mobile body, arrival possible time set in advance from the control area to the other control area.

6. The control management device according to any one of claims 1 to 5, wherein
the synchronization controller causes storing of synchronization timing information in which medium identification information of the medium on which the usage result is reflected, server identification information that is identification information of control management devices in the other plurality of control areas and arrival possible time of the medium at the control areas are associated with each other, and transmits, based on the arrival possible time, the right usage information of the medium corresponding to the medium identification information to the control management devices of the corresponding server identification information.

7. The control management device according to claim 6, wherein
the synchronization controller transmits, where a usage result of the right usage information allocated to the medium in the control area is reflected on the right usage information, a deletion request for deleting setting for transmitting the right usage information of the medium to the control management devices of the other control areas.

8. The control management device according to claim 7, wherein
the synchronization controller transmits deletion requests for deleting the setting for transmitting the right usage information of the plurality of media as one deletion request.

9. The control management device according to any one of claims 6 to 8, wherein
the synchronization controller deletes, where a deletion request for deleting setting for transmitting right usage information of the medium is received from management control servers of the other control areas, the setting for transmitting the right usage information of the medium to the control management devices of the other control areas.

10. The control management device according to any one of claims 1 to 9, wherein
the synchronization controller transmits the right usage information of the medium updated by the update unit to a center server that manages the right usage information of the medium.

11. A right information management system in which a control management system that manages right usage information relating to usage of right information allocated to a medium is provided correspondingly to each of three or more control areas, wherein
the control management system, which corresponds to each of the control areas, includes:
a right usage information storage unit configured to store right usage information regarding each of a plurality of media;
an acquisition unit configured to acquire medium identification information of a medium of a usage target;
a processor configured to specify the right usage information based on the acquired medium identification information and determine a usage result based on the specified right usage information and a usage substance by the medium;
an update unit configured to update the right usage information based on the usage result determined by the processor; and
a synchronization controller configured to transmit the right usage information of the medium updated by the update unit in order from the control management system for a control area at which arrival possible time of the medium is shorter.
